# EUROPÄISCHE PATENTSCHRIFT

(11) **EP 1 444 855 B1**
(45) Veröffentlichungstag und Bekanntmachung des Hinweises auf die Patenterteilung: **21.02.2007**
(21) Anmeldenummer: 02776795.3
(22) Anmeldetag: 08.10.2002
(51) Int. Cl.: H04Q 7/38, H04M 1/64, H04M 3/533

(54) **RÜCKSETZEN VON VERSENDETEN INFORMATIONEN**
RESETTING SENT INFORMATION
REINITIALISATION D'INFORMATIONS EMISES

(30) Priorität: 02.11.2001 DE 10154053
(43) Veröffentlichungstag der Anmeldung: 11.08.2004
(73) Patentinhaber: Deutsche Telekom AG, 53113 Bonn (DE)
(72) Erfinder: TRINKEL, Marian, 52372 Kreuzau-Untermaubach (DE)
(86) Internationale Anmeldenummer: PCT/DE2002/003800
(87) Internationale Veröffentlichungsnummer: WO 2003/041434

(56) Entgegenhaltungen:
- EP-A- 0 820 182
- US-A- 5 022 070
- US-A- 5 461 665
- US-B1- 6 219 542
- REUSCHENBACH H: "MEHR TELEFON-KOMFORT IM C-NETZ" FUNKSCHAU, FRANZIS-VERLAG K.G. MUNCHEN, DE, Bd. 63, Nr. 2, 11. Januar 1991 (1991-01-11), Seiten 54-56, XP000237393 ISSN: 0016-2841

## Beschreibung

Die vorliegende Erfindung betrifft ein Verfahren zum Betrieb eines an ein Telekommunikationsnetz, insbesondere ein Telefonnetz, angeschlossenen Nachrichtenspeichers (Mobilbox), der einem über eine individuelle Netzkennung einwählbaren Teilnehmeranschluss eines Adressaten zugeordnet ist und auf dem ein Absender eine für den Adressaten bestimmte und von diesem abrufbare Nachricht hinterlassen kann.

Derartige Verfahren werden bekanntermaßen von Anrufbeantwortern bzw. von Mobilboxen realisiert, die sich bei Anruf anstelle des Adressaten beim Anrufer melden und diesem nach einer Sprachansage die Möglichkeit geben, eine Nachricht auf Band zu hinterlassen, Die hinterlassene Nachricht kann dann von dem Adressaten, für den die Nachricht bestimmt ist, zu beliebiger Zeit abgehört werden. Diese im folgenden als Mobilboxen bezeichnete Systeme werden nicht nur zur Aufnahme von Sprachnachrichten, sondern auch zur Aufnahme von Telefaxen benutzt, in denen der Absender eine Faxnachricht für den späteren Abruf hinterlassen kann. Vergleichbare Verfahren sind im Internet realisiert, wo der Absender bei ausgewählten Adressaten e-mails in einem bestimmten Speicherbereich hinterlassen kann, die erst später vom Adressaten ausgelesen werden. Dabei ist es auch bekannt, die hinterlassenen Nachrichten von externen Geräten aus, beispielsweise von Telefonanschlüssen, auszulesen. So kann der Anwender von unterwegs per Telefon auf alle Nachrichten zugreifen, eingegangene Sprachnachrichten abhören oder Faxnachrichten bzw. e-mails auf ein beliebiges Gerät weiterleiten, von wo sie dann zum Ausdruck bereitstehen. Dabei sind den e-mails die sogenannten SMS-Nachrichten (short message service) gleichgestellt.

Nachteilig an den bekannten Verfahren ist jedoch, daß die aufgesprochenen Nachrichten sich mitunter zum Zeitpunkt der Auslese bzw. des Abhörens überholt haben. So ist es denkbar, daß eine Person A der anderen Person B auf die Mailbox spricht, daß sie zu einem gewissen Zeitpunkt am Bahnhof ankommt und abgeholt werden möchte. Nachträglich stellt sich jedoch heraus, daß sich eine andere Reisemöglichkeit ergeben hat und Person A spricht eine weitere Nachricht, deren Inhalt die erste Nachricht ersetzt, auf das Band. Person B hört jedoch nur die erste Nachricht ab und eilt sofort zum Bahnhof, da nur noch wenig Zeit verbleibt. Erst als Person B wieder enttäuscht zuhause ankommt, erfährt sie von der zweiten Nachricht, die den Inhalt der ersten Nachricht ersetzt. Derartige Kommunikationsprobleme können bei den heute bekannten Verfahren jederzeit auftreten.

Die US 5 022 070 A offenbart einen Nachrichtenspeicher, der einem Adressaten zugeordnet ist und auf dem ein Absender eine vom Adressaten abrufbare Nachricht hinterlassen kann; für den Absender besteht die Möglichkeit, den Inhalt einer von ihm hinterlassenen Nachricht nach vorheriger Authentifizierung nachträglich zu löschen. Die EP 0 820 182 A2 beschreibt eine Mailboxverwaltung, bei der der Mailboxbesitzer durch Spracheingabe von Informationen identifiziert wird.

Aufgabe der vorliegenden Erfindung ist es nunmehr, ein Verfahren zu schaffen, das sich mit einfachen und kostengünstigen Mitteln umsetzen lässt und das vor der Aktualisierung einmal hinterlassener Nachrichten eine einfache Authentifizierung des Absenders solcher Nachrichten zulässt. Gleichzeitig ist es Aufgabe der Erfindung, eine Vorrichtung zur Umsetzung des Verfahrens zu schaffen.

Diese Aufgaben werden durch ein Verfahren nach Anspruch 1 und einer Vorrichtung nach Anspruch 7 gelöst.

Der erfindungswesentliche Gedanke liegt darin, dem Absender einer Nachricht nachträglich die Möglichkeit zu geben, die einmal hinterlassene Nachricht nach vorheriger Authentifizierung durch ein gesprochenes Schlüsselwort und/oder durch Stimmvergleich zu ändern und gegebenenfalls zu löschen. Die Vorteile eines solchen Verfahrens liegen auf der Hand. So können fehlerhafte oder veraltete im Nachhinein überarbeitet werden, um Missverständnisse der gezeigten Art auszuschließen. Einmal versendete Nachrichten können also bei Sprach- bzw. Faxboxen, die dieses Verfahren realisieren, wieder zurückgeholt werden. Dabei ist es um Missbrauch auszuschließen erfindungswesentlich, dass sich der Absender, der eine Nachricht überarbeiten möchte, zunächst authentifiziert. Die Erfindung manifestiert sich somit in der für den Absender bestehenden Möglichkeit, den Inhalt einer hinterlassenen Nachricht nach vorheriger Authentifizierung nachträglich zu ändern.

Im Gegensatz zu den bekannten Systemen, bei denen nur der Adressat die Möglichkeit des Abhörens und Löschens der Nachrichten hat, besteht diese Möglichkeit nun erfindungsgemäß für jedermann, sofern ihm eine Berechtigung zugesprochen wird. Mit dem neuartigen Verfahren lässt sich von Betreibern von Telekommunikationsnetzen ein neuer, kundenfreundlicher Service anbieten, der ein attraktives Leistungsmerkmal für bestehende Produkte bildet. Außerdem lassen sich mit der Erfindung neue Geschäftsmodelle realisieren.

Da der Absender der Herr der Daten ist, kann ein versehentliches Versenden von Nachrichten, beispielsweise von falschen Informationen, von ihm wieder zurückgenommen werden. Gerade in asiatischen Kulturkreisen ist eine solche Einrichtung wertvoll, um dem Anrufer die Möglichkeit zu geben, sein Gesicht zu wahren. Die erfinderische Idee ist überall dort einsetzbar, wo Daten versendet und vor allem zentral gespeichert werden. Für den Netzanbieter der ein solches Verfahren realisiert, ergibt sich eine neue Chance im Wettbewerb. Das Verfahren muß nicht zentral organisiert sein, es kann auch von Endgeräten realisiert werden, die wie die bekannten Anrufbeantworter am Netzzugang eines Kunden angeschlossen sind.

Für die Authentifizierung des Absenders können je nach Anwendungsgebiet verschiedene Verfahren herangezogen werden. In einer besonders einfachen und deswegen vorteilhaften Art wird neben der hinterlassenen Nachricht die Netzkennung des Adressaten gespeichert. Ruft der Adressat mit derselben Netzkennung noch einmal an, so wird ihm automatisch die ursprünglich hinterlassene Nachricht zugeordnet und er erhält die Möglichkeit, diese zu überarbeiten. Das System wertet also die Kennung des Anschlusses aus und erkennt den Absender anhand dieser Kennung. In einer anderen Ausführungsform des Verfahrens wird der Absender durch den Inhalt eines von ihm gesprochenen Schlüsselwortes identifiziert, das im Zusammenhang mit der einmal hinterlassenen Nachricht gespeichert ist. So ist es beispielsweise möglich, dass der erneut anrufende Adressat durch das Wort "Bahnhof" mit seiner Nachricht, in der er um ein Treffen am Bahnhof bittet, in Verbindung gebracht wird. Er erhält bei Übereinstimmung des Schlüsselwortes Zugang zu der Nachricht. Als Schlüsselwort dienen dabei insbesondere die in der zunächst hinterlassenen Nachricht gesprochenen Worte.

Neben dem Inhalt der Nachricht können auch sprachspezifische Charakteristika zur Authentifikation herangezogen werden. So kann ein Vergleich der Stimmen geschehen, wobei es genügt, dass sich der erneut anrufende Absender mit ein paar gesprochenen Worten bei der Mobilbox meldet und ein darauf realisiertes Programm anhand der Stimmfarbe und des Klanges einen Vergleich mit den gesprochenen Nachrichten anstellt. Dieser Vergleich der stimmlichen Charakteristika kann auch zusätzlich zu dem zuvor genannten Verfahren der Authentifizierung anhand von Schlüsselworten herangezogen werden. Der Stimmvergleich wird dabei insbesondere durch ein vom Netzanbieter zur Verfügung gestelltes Programm zur Sprachanalyse durchgeführt werden. Die bekannten Programme können eine Person anhand der stimmlichen Eigenheiten wie dem Klang, der Farbe oder der Länge von Sprech- oder Mikropausen analysieren.

Hat sich der erneut anrufende Adressat authentifiziert, ist es vorteilhaft, dass die Mobilbox es gestattet, über eine insbesondere sprachgesteuerte Menüführung zu seiner aufgesprochenen ersten Nachricht zu navigieren, um ihm dann die Möglichkeit zu geben, diese abzuhören, zu übersprechen und/oder zu löschen. In diesem Rahmen ist der Absender Herr seiner einmal gesprochenen Daten. Dabei ist es besonders vorteilhaft, wenn eine in der Mailbox hinterlassene Nachricht automatisch gekennzeichnet wird, sobald sie vom Adressaten abgerufen wurde. Diese Kennzeichnung wird vom erneut anrufenden Absender registriert, so dass dieser die Information erhält, dass seine "irreführende" Nachricht schon angekommen ist und eine weitere Nachricht die Verwirrung möglicherweise komplettiert.

Das erfindungsgemäße Verfahren wird vorteilhafterweise durch eine Vorrichtung realisiert, die ein Korrekturmodul aufweist, das es einem Absender nach vorheriger Authentifizierung erlaubt, eine einmal gespeicherte Nachricht zu ändern und/oder zu löschen. Ein solches Korrekturmodul wird in einer vorteilhaften Ausführungsform durch ein Programm realisiert, das auf einem an das Netz angeschlossenen Rechner läuft.

## Patentansprüche

1. Verfahren zum Betrieb eines an ein Telekommunikationsnetz, insbesondere ein Telefonnetz, angeschlossenen Nachrichtenspeichers, der einem über eine individuelle Netzkennung anwählbaren Teilnehmeranschluß eines Adressaten zugeordnet ist und auf dem ein Absender eine für den Adressaten bestimmte und von diesem abrufbare Nachricht hinterlassen kann, wobei für den Absender eine Möglichkeit besteht, den Inhalt einer hinterlassenen Nachricht nach vorheriger Authentifizierung nachträglich zu ändern und/oder zu löschen, **dadurch gekennzeichnet, dass** der Absender sich durch ein gesprochenes Schlüsselwort authentifiziert, das im Zusammenhang mit der hinterlassenen Nachricht gespeichert ist und/oder dass die Authentifizierung des Absenders durch einen Vergleich seiner Stimme mit den Stimmen der gesprochenen Nachrichten geschieht, wobei der Vergleich durch ein vom Netzanbieter zur Verfügung gestelltes Programm zur Sprachanalyse durchgeführt wird.

2. Verfahren nach Anspruch 1, **dadurch gekennzeichnet, daß** der Absender sich durch seine ihm zugeordnete Netzkennung authentifiziert, die im Zusammenhang mit der hinterlassenen Nachricht gespeichert ist.

3. Verfahren nach einem der vorherigen Ansprüche, **dadurch gekennzeichnet, daß** als Schlüsselwort die in der hinterlassenen Nachricht gesprochenen Worte dienen.

4. Verfahren nach einem der vorherigen Ansprüche, **dadurch gekennzeichnet, daß** ein Vergleich der Stimmen anhand von Schlüsselworten erfolgt.

5. Verfahren nach einem der vorherigen Ansprüche, **dadurch gekennzeichnet, daß** der Absender nach der Authentifizierung von dem Nachrichtenspeicher über eine Menüführung zu seiner aufgesprochenen Nachricht navigiert und die Möglichkeit hat, diese abzuhören, zu übersprechen und/oder zu löschen.

6. Verfahren nach einem der vorherigen Ansprüche, **dadurch gekennzeichnet, daß** eine hinterlassene Nachricht automatisch **gekennzeichnet** wird, sobald sie vom Adressaten abgerufen ist.

7. Vorrichtung zur Speicherung eingehender Nachrichten, insbesondere zur Durchführung des Verfahrens nach einem der vorherigen Ansprüche, mit einem Korrekturmodul, das es einem Absender nach vorheriger Authentifizierung erlaubt, eine von ihm hinterlegte und gespeicherte Nachricht zu ändern und/oder zu löschen, **dadurch gekennzeichnet, dass** der Absender durch ein gesprochenes Schlüsselwort authentifizierbar ist, das im Zusammenhang mit der hinterlassenen Nachricht gespeichert ist und/oder dass der Absender durch einen Vergleich seiner Stimme mit den Stimmen der gesprochenen Nachrichten authentifizierbar ist, wobei der Vergleich durch ein vom Netzanbieter zur Verfügung gestelltes Programm zur Sprachanalyse durchgeführt wird.

8. Vorrichtung nach Anspruch 7, **dadurch gekennzeichnet, daß** das Korrekturmodul durch ein Programm realisiert ist, das auf einem an das Netz angeschlossenen Rechner läuft.

## Claims

1. Method for operating a message store that is connected to a telecommunications network, in particular a telephone network, and that is assigned to a subscriber line of an addressee which can be selected by means of an individual network identification, and in which message store a sender can leave a message intended for and retrievable by the addressee, wherein the sender has an option of later changing and/or deleting the content of a message after prior authentication, **characterized in that** the sender authenticates himself by means of a spoken keyword that is stored in association with the message and/or **in that** the authentication of the sender is accomplished by a comparison of his voice with the voices of the spoken messages, wherein the comparison is performed by a voice analysis program made available by the network provider.

2. Method according to claim 1, **characterized in that** the sender authenticates himself by means of a network identification assigned to him that is stored in association with the message.

3. Method according to any one of the preceding claims, **characterized in that** the words spoken in the message serve as the keyword.

4. Method according to any one of the preceding claims, **characterized in that** a comparison of the voices is performed using keywords.

5. Method according to any one of the preceding claims, **characterized in that**, after authentication by the message store, the sender navigates through a menu system to his spoken message and has the option of listening to, recording over, and/or deleting said message.

6. Method according to any one of the preceding claims, **characterized in that** a message is automatically flagged once it has been retrieved by the addressee.

7. Device for storing incoming messages, in particular for carrying out the method according to any one of the preceding claims, having a correction module that permits a sender, after prior authentication, to change and/or delete a stored message he has left, **characterized in that** the sender can be authenticated by a spoken keyword that is stored in association with the message and/or **in that** the sender can be authenticated by a comparison of his voice with the voices of the spoken messages, wherein the comparison is performed by a voice analysis program made available by the network provider.

8. Device according to claim 7, **characterized in that** the correction module is implemented by a program that runs on a computer connected to the network.

## Revendications

1. Procédé permettant de faire fonctionner une mémoire de messages raccordée à un réseau de télécommunications, notamment à un réseau téléphonique, affectée à une ligne d'abonné d'un destinataire adressable par l'intermédiaire d'un indicatif réseau individuel, et dans laquelle un expéditeur peut laisser un message destiné au destinataire et pouvant être consulté par ce dernier, l'expéditeur ayant la possibilité, après authentification préalable, de modifier et/ou de supprimer ultérieurement le contenu du message laissé, **caractérisé en ce que** l'expéditeur s'authentifie moyennant un mot clé parlé enregistré en rapport avec le message laissé et/ou l'authentification de l'expéditeur s'effectue par comparaison de sa voix avec les voix des messages parlés, la comparaison étant exécutée par un programme d'analyse vocale mis à disposition par l'opérateur de réseau.

2. Procédé selon la revendication 1, **caractérisé en ce que** l'expéditeur s'authentifie par l'intermédiaire de l'indicatif réseau qui lui est attribué et qui est stocké en rapport avec le message laissé.

3. Procédé selon l'une des revendications précédentes, **caractérisé en ce que** les mots parlés dans le message laissé servent de mot clé.

4. Procédé selon l'une des revendications précédentes, **caractérisé en ce qu'**une comparaison des voix est effectuée moyennant des mots clés.

5. Procédé selon l'une des revendications précédentes, **caractérisé en ce que**, après authentification, l'expéditeur navigue, guidé par un menu, de la mémoire de messages vers son message parlé et a la possibilité de l'écouter, de l'écraser par un nouveau message et/ou de le supprimer.

6. Procédé selon l'une des revendications précédentes, **caractérisé en ce qu'**un message laissé est automatiquement marqué dès qu'il ait été consulté par le destinataire.

7. Dispositif d'enregistrement de messages entrants, notamment pour la réalisation du procédé selon l'une des revendications précédentes, comportant un module de correction permettant à un expéditeur, après authentification préalable, de modifier et/ou de supprimer un message qu'il a laissé et enregistré, **caractérisé en ce que** l'expéditeur est authentifiable par un mot clé parlé enregistré en rapport avec le message laissé et/ou l'expéditeur est authentifiable par une comparaison de sa voix avec les voix des messages parlés, la comparaison étant exécutée par un programme d'analyse vocale mis à disposition par l'opérateur de réseau.

8. Dispositif selon la revendication 7, **caractérisé en ce que** le module de correction est réalisé par un programme fonctionnant sur un ordinateur raccordé au réseau.
